# FASCICULE DE BREVET EUROPEEN

(11) **EP 3 390 956 B1**
(45) Date de publication et mention de la délivrance du brevet: **03.06.2020**
(21) Numéro de dépôt: 16816657.7
(22) Date de dépôt: 16.12.2016
(51) Int. Cl.: F42B 3/04, B60R 21/264

(54) **GENERATEUR DE GAZ**
GASGENERATOR
GAS GENERATOR

(30) Priorité: 18.12.2015 FR 1562881
(43) Date de publication de la demande: 24.10.2018
(73) Titulaire: Autoliv Development AB, 447 83 Vårgårda (SE)
(72) Inventeur: PRIMA, Gerald, 29510 Landrévarzec (FR); CORNEC, Sebastien, 29710 Landudec (FR)
(74) Mandataire: Vigand, Philippe
(86) Numéro de dépôt international: PCT/EP2016/081468
(87) Numéro de publication internationale: WO 2017/103135

(56) Documents cités:
- FR-A1- 2 922 007
- US-A- 4 798 142

## Description

La présente invention concerne de manière générale un générateur de gaz destiné par exemple à être monté dans un module de sécurité automobile tel qu'un airbag.

Il est connu dans l'art antérieur de souder par friction entre eux des composants de générateurs de gaz pour obtenir un assemblage robuste. Par exemple, le document FR2922007 divulgue un générateur de gaz comprenant trois pièces soudées ensemble par friction. En contrepartie, ce système présente notamment l'inconvénient d'être complexe à fabriquer, car il faut préalablement souder deux pièces entre elles, pour ensuite les souder par friction sur la troisième. Cette opération intermédiaire allonge le temps de cycle et augmente le coût de fabrication.

Le document US5590905 A décrit un générateur de gaz selon le préambule de la revendication 1.

Un but de la présente invention est de répondre aux inconvénients mentionnés ci-dessus et en particulier, tout d'abord, de proposer un générateur de gaz comprenant trois pièces soudées entre elles par une opération de soudure par friction, et dont l'assemblage ne nécessite pas d'opérations complexes.

Pour cela un premier aspect de l'invention concerne un générateur de gaz selon la revendication 1 comprenant :
- au moins une matière pyrotechnique agencée pour produire des gaz,
- au moins un sous ensemble formé au moins par une première pièce et une deuxième pièce fixées ensemble par soudure par friction,
- au moins une troisième pièce fixée à au moins l'une de la première pièce et de la deuxième pièce par soudure par friction,
caractérisé en ce que la troisième pièce et l'une de la première pièce et de la deuxième pièce comprennent chacune une interface d'indexage agencée pour bloquer temporairement au moins deux degrés de liberté entre la troisième pièce et ladite une de la première pièce et de la deuxième pièce, de sorte à permettre une soudure par inertie simultanée de la troisième pièce et ladite une de la première pièce et de la deuxième pièce sur l'autre de la première pièce et de la deuxième pièce. Selon cette mise en œuvre, la troisième pièce est indexée à l'une des deux autres, pour être entrainée par cette dernière lors de la soudure friction, ce qui permet de la souder par friction sur l'autre pièce en même temps. L'interface d'indexage est prévue pour fournir un indexage amovible ou réversible entre la troisième pièce et ladite une de la première pièce et de la deuxième pièce, préalablement à l'opération de soudure par friction. En d'autres termes, il suffit d'indexer (par emboîtement libre ou en force, insertion libre ou en force, encliquetage par exemple) la troisième pièce sur ou dans ladite une de la première pièce et de la deuxième pièce, pour obtenir un sous ensemble intermédiaire lors de la fabrication, juste avant la soudure par friction sur l'autre de la première pièce et de la deuxième pièce. En conséquence, on comprend qu'il est possible lors de l'opération de soudage de ne prévoir un outillage de préhension que pour la première et la deuxième pièce, car la troisième pièce est indexée par la première ou la deuxième pièce. La fabrication est donc simplifiée, plus rapide et requiert moins d'investissements.

Avantageusement, la première pièce et la deuxième pièce sont fixées ensemble le long d'une zone de soudure par friction, et la troisième pièce est fixée à au moins l'une de la première pièce et de la deuxième pièce par ladite soudure par friction desdites première et deuxième pièces, au niveau de ladite zone de soudure par friction, (autrement appelée soudure friction par inertie). Selon cette mise en œuvre, il n'y a qu'une zone de soudure par friction pour les trois pièces. Pour rappel, une soudure par friction est réalisée en pressant les pièces à assembler entre elles alors que l'une des pièces est fixe et que l'autre est en rotation, de sorte à provoquer une élévation de température engendrée par le frottement ; élévation de température propice à un mélange des matières alors pâteuses et issues des deux pièces qui permet leur assemblage. Une zone de soudure par friction se caractérise au moins par la présence d'un bourrelet ou d'une bavure de matière qui a refluée au cours de l'opération (le bourrelet pouvant éventuellement être ôté si nécessaire par une opération supplémentaire). La zone de soudure est généralement étanche, et très robuste. Selon la présente mise en œuvre, la première, deuxième et troisième pièces étant soudées dans la même zone, le bourrelet ou bavure de matière est donc commun ce qui réduit l'encombrement de l'assemblage. En effet, il n'est pas nécessaire de laisser de l'espace pour la formation de deux bourrelets distincts. On peut aussi regarder au niveau microscopique de la matière, et constater alors que les trois pièces partagent une même zone affectée thermiquement.

Avantageusement, la première pièce et la deuxième pièce présentent des parois d'épaisseur prédéterminées, et la troisième pièce présente une paroi d'épaisseur inférieure à la moitié de l'épaisseur de la première et/ou de la deuxième pièce. Autrement dit, la troisième pièce est bien plus mince que la première et/ou la deuxième pièce, ce qui permet de la souder par friction sans influencer la fixation entre la première et la deuxième pièce et permet de fixer par friction une pièce fine sur une pièce beaucoup plus épaisse, la première ou la deuxième pièce servant de support à la troisième lors de l'opération de soudure. Autrement dit, l'invention propose souder par friction une troisième pièce fine au même niveau que la soudure entre deux autres pièces plus épaisses, ce qui permet de souder par friction une telle troisième pièce fine qui ne serait pas soudable par friction. On obtient une soudure solide entre la première et la deuxième pièce, et au moins une soudure étanche entre la troisième pièce et la première et/ou la deuxième pièce. Avantageusement, les première et deuxième pièces auront une épaisseur comprise entre 1.2mm et 3mm et la troisième une épaisseur entre 0.5mm et 1.5mm d'épaisseur.

Selon l'invention, la soudure par friction est réalisée par une opération de soudage par outil à inertie de rotation, et l'interface d'indexage est agencée pour garantir un entraînement en rotation de la troisième pièce par ladite une de la première pièce et de la deuxième pièce, lors de l'opération de soudage, sans contact entre l'outil à inertie de rotation et la troisième pièce.

Avantageusement, l'interface d'indexage est agencée pour garantir un arrêt en translation de la troisième pièce par ladite une de la première pièce et de la deuxième pièce, selon un axe de rotation de l'outil à inertie de rotation. En d'autre termes, l'indexage fournit une butée mécanique dans le sens de l'effort de forgeage.

Avantageusement, la troisième pièce et ladite une de la première pièce et de la deuxième pièce présentent chacune une paroi latérale soudée sur l'autre de la première pièce et de la deuxième pièce, et la paroi latérale de la troisième pièce est maintenue au niveau de la paroi latérale de ladite une de la première pièce et de la deuxième pièce. C'est donc la même paroi qui est soudée par friction et qui procure le maintien et le centrage des pièces. Le centrage et le maintien est donc efficace, puisqu'il est au plus près de la zone de soudure qui génère tous les efforts internes.

Avantageusement, l'interface d'indexage comprend des zones déformées ponctuelles d'une paroi latérale de la troisième pièce et/ou ladite une de la première pièce et de la deuxième pièce. L'interface d'indexage peut comporter entre 1 et 10 déformations ponctuelles et comporte préférentiellement 6 déformations. Préférentiellement, les déformations sont diamétralement opposées deux à deux, par rapport à un axe de symétrie de rotation du générateur de gaz. Dans cette configuration l'impact de l'effort axial de soudure sur l'enfoncement de la troisième pièce est limité.

Avantageusement, les zones déformées sont des renfoncements vers l'intérieur du générateur. De tels renfoncements sont aisés à fabriquer, avec une presse et des poinçons qui repoussent la matière.

Avantageusement, l'interface d'indexage forme une zone d'ancrage pour une quatrième pièce sertie sur le sous ensemble. Les renfoncements qui servent d'indexage sur une face d'une paroi de ladite une de la première pièce et de la deuxième pièce, peuvent tout naturellement servir d'ancrage de sertissage sur l'autre face de la paroi de ladite une de la première pièce et de la deuxième pièce. En effet, un sertissage nécessite une portion en creux (une gorge, un puits, un renfoncement), et l'invention propose de se servir de l'interface d'indexage prévue pour la troisième pièce. En d'autres termes, l'interface d'indexage est réutilisée sur l'autre face de la première ou deuxième pièce pour sertir une quatrième pièce.

Avantageusement, la quatrième pièce comprend une collerette agencée pour servir d'interface de fixation du générateur de gaz dans un module de sécurité automobile. On peut prévoir des trous de fixation, ou des goujons sur la collerette.

Avantageusement, le sous ensemble forme une chambre comprenant du gaz sous pression.

Avantageusement, le sous ensemble forme une chambre de combustion du générateur de gaz et comprend au moins une tuyère agencée pour piloter une combustion sous pression de ladite au moins une matière pyrotechnique, et la troisième pièce est agencée entre ladite au moins une tuyère et ladite au moins une matière pyrotechnique. La troisième pièce est au cœur de la chambre de combustion, entre la matière pyrotechnique et la ou les tuyères.

La matière pyrotechnique peut être sous formes de pastilles chargées en vrac dans la chambre de combustion, mais aussi sous forme d'un bloc monolithique.

Avantageusement, le générateur de gaz comprend au moins un filtre, agencé entre la troisième pièce et ladite au moins une tuyère.

Avantageusement, la troisième pièce est une grille de calage. Une telle grille, soudée par friction, est alors solidement attachée à la structure du générateur, ce qui permet de résister au flux de gaz générés pendant le fonctionnement du générateur de gaz (de quelques litres à quelques dizaines de litres de gaz, soit entre 0.1 et 10 moles de gaz, traversent la grille en un temps compris entre 5ms et 100ms).

Avantageusement, la troisième pièce est un opercule. L'étanchéité procurée par la soudure par friction permet de garantir un stockage de la matière pyrotechnique à l'abri de l'eau pendant une longue période (jusqu'à 15 ans par exemple).

Avantageusement :
- la première pièce comprend un fond et une paroi latérale agencée entre le fond et une ouverture agencée pour recevoir ladite au moins une matière pyrotechnique au cours de la fabrication du générateur de gaz,
- la troisième pièce est contenue dans la première pièce, et agencée entre l'ouverture et ladite au moins une matière pyrotechnique.

Avantageusement, la première pièce comprend une paroi latérale et la troisième pièce comprend une paroi latérale qui épouse au moins partiellement la paroi latérale de la première pièce.

Avantageusement :
- la deuxième pièce présente une paroi,
- la première pièce comprend une paroi latérale perpendiculaire à la paroi de la deuxième pièce,
- la troisième pièce comprend une paroi latérale perpendiculaire à la paroi de la deuxième pièce,
et la soudure par friction est réalisée au niveau de la jonction de ladite paroi de la deuxième pièce, de ladite paroi latérale perpendiculaire de la première pièce et de ladite paroi latérale perpendiculaire de la troisième pièce.

Avantageusement, un jeu au rayon entre la paroi latérale de la première pièce et la paroi latérale de la troisième pièce est inférieur à 0.5mm.

Avantageusement, le sous ensemble forme un boîtier, et la deuxième pièce ferme une ouverture de la première pièce.

Un deuxième aspect de l'invention concerne un module de sécurité automobile comprenant au moins un générateur de gaz selon le premier aspect de l'invention.

Un troisième aspect de l'invention concerne un véhicule automobile comprenant au moins un générateur de gaz selon le premier aspect de l'invention.

D'autres caractéristiques et avantages de la présente invention apparaîtront plus clairement à la lecture de la description détaillée qui suit d'un mode de réalisation de l'invention donné à titre d'exemple nullement limitatif et illustré par les dessins annexés, dans lesquels :
- la figure 1 représente une coupe d'un générateur de gaz selon la présente invention, comprenant une chambre de combustion formée par deux pièces soudées par friction ;
- la figure 2 représente un détail du générateur de la figure 1, au niveau d'une zone de soudure par friction.

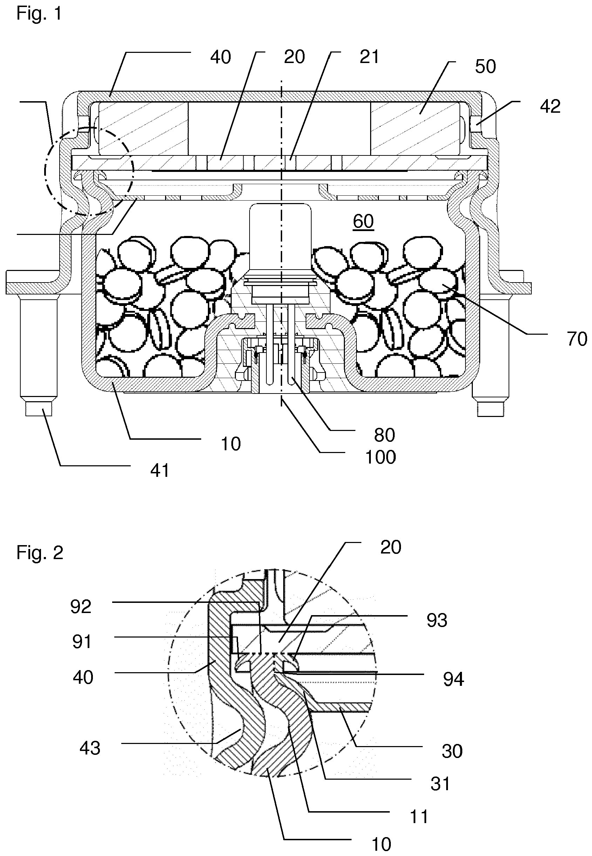

La figure 1 représente un générateur de gaz comprenant une chambre de combustion 60 formée essentiellement par un première pièce 10 soudée par friction sur une deuxième pièce 20, et qui contient une matière pyrotechnique 70, un sous ensemble d'allumage 80 et une troisième pièce 30.

Une quatrième pièce 40 est fixée sur la première pièce 10 par sertissage pour positionner un filtre 50 entre la deuxième pièce et des trous de diffusion 42 agencés sur la quatrième pièce 40. De plus, la quatrième pièce 40 comprend une collerette sur laquelle sont positionnés des goujons 41, pour fixer le générateur de gaz sur un module de sécurité (un airbag), ou directement sur un volant de véhicule par exemple.

La matière pyrotechnique 70 se trouve sous forme de pastilles chargées en vrac dans la chambre de combustion 60, mais on peut également envisager un chargement de pastille ordonné, ou même de prévoir la matière pyrotechnique sous la forme d'un bloc monolithique de propergol.

Le sous ensemble d'allumage 80 est ici surmoulé sur la première pièce 10, pour positionner son étui dans la chambre de combustion, et avoir des broches de connexion accessibles depuis l'extérieur du générateur de gaz. Cependant, d'autres montages sont possibles, comme par exemple de sertir un allumeur électro pyrotechnique sur une pièce métallique soudée sur la première pièce 10.

Le générateur de gaz présente une forme de révolution, une forme discoïde, et comme mentionné ci-dessus, la première pièce 10 est soudée par friction sur la deuxième pièce 20. En effet, des pièces de géométrie de révolution se prêtent bien à une telle soudure par friction, autrement appelée soudage par outil à inertie de rotation. Lors d'une telle opération de soudure, les deux pièces à souder sont fermement maintenues dans des mors de serrage, et l'une (la première pièce 10 par exemple) est mise en rotation à haute vitesse, et ensuite poussée sur la deuxième pièce 20 qui reste statique. Il s'ensuit un frottement entre ces deux pièce, ce qui provoque un échauffement et donc un ramollissement des matières, ce qui permet, sous l'action d'un effort de poussée axiale, de fixer solidement les deux pièces entre elles.

Le résultat d'une telle soudure est visible figure 1 sous la forme de bourrelets ou bavures de matière de part et d'autre de la zone de soudure. Ces bourrelets 91 et 93, agencés de part et d'autre de la première pièce 10 sont mieux visibles sur la figure 2. Ces bourrelets 91 et 93 sont créés essentiellement par la matière de la première pièce 10 qui "s'est enfoncée" au cours de la soudure friction, sous l'effet de l'effort axial, ou encore effort de forgeage mais aussi par la matière de la troisième pièce 30. Il est à noter que seulement deux bourrelets 91 et 93 sont formés alors que deux pièces sont soudées sur la deuxième pièce 20. La valeur de cet enfoncement, ou déplacement axial peut être appelé "consommation matière", et une consommation matière minimum est requise pour obtenir une résistance et une étanchéité suffisante de la soudure par friction pour un générateur de gaz. Par exemple, si la première pièce 10 présente une épaisseur de 2 millimètre, alors on peut considérer que la soudure par friction permettra de résister aux conditions de pression dans le générateur si la consommation matière est comprise entre 1.5 et 2.5 millimètres. Pour que la soudure réponde aux spécifications, il est nécessaire que les deux pièces à souder s'échauffent suffisamment aussi il est préférable de choisir des épaisseurs de pièces similaires sinon seule une des deux pièces s'échauffera. Ainsi, il n'est pas envisageable de souder deux pièces avec des épaisseurs sensiblement différentes. Cependant, l'invention propose de souder, en même temps et au même niveau que deux pièces épaisses (la première pièce 10 et la deuxième pièce 20) une troisième pièce 30 plus fine qui ne serait pas facilement soudable par inertie seule, car trop déformable.

Bien entendu, d'autres paramètres sont à surveiller, comme la vitesse de rotation et l'effort de forgeage. On peut aussi pratiquer un test d'étanchéité à l'hélium pour vérifier que la soudure répond aux spécifications d'étanchéité courantes dans la sécurité automobile telle que la norme USCAR-24 2ème révision du mois d'avril 2013. Par exemple, pour un générateur tout pyrotechnique, une chambre de combustion avec un taux de fuite Hélium inférieur à 1.10⁻⁴ cm³.atm⁻¹.s⁻¹ peut être considérée comme étanche (avec 100% d'hélium initialement dans la chambre de combustion).

Comme expliqué ci-dessus, une troisième pièce 30 est agencée dans la chambre de combustion 60, entre la matière pyrotechnique 70 et des tuyères 21 de la deuxième pièce 20, qui sont agencées pour piloter la combustion de la matière pyrotechnique 70, une fois allumée par le sous ensemble d'allumage 80 (typiquement, à la suite d'un accident de la circulation, détecté par une unité centrale électronique).

Comme on le voit sur la figure 1 et surtout sur la figure 2, la troisième pièce est fixée à la première pièce 10 et à la deuxième pièce 20, au niveau de la même soudure par friction qui solidarise ces deux pièces 10 et 20. En effet, le bourrelet de matière 93 est créé aussi bien par la matière de la première pièce 10 que par la matière de la troisième pièce 30, et surtout, il n'est pas formé entre ces deux pièces 10 et 30. L'âme ou la paroi des première et troisième pièces 10 et 30 est située entre les bourrelets de matière 91 et 93.

Par ailleurs, on peut aussi constater au niveau d'une coupe comme sur la figure 2 qu'il n'y a plus de jeu ou espace entre la première, deuxième et troisième pièces 10, 20 et 30. En d'autres termes, on passe de manière continue de l'une de ces trois pièces 10, 20 et 30 aux autres. Des pointillés 92 et 94 sont représentés figure 2 pour montrer cette continuité de matière entre les pièces.

La troisième pièce 30 est donc soudée au niveau de la même zone de soudure par friction que la première et deuxième pièce 10 et 20. L'invention prévoit à cet effet d'indexer la troisième pièce 30 par rapport à la première pièce 10, pour permettre la soudure par friction de manière simultanée entre les trois pièces 10, 20 et 30. En effet, la première pièce 10 comprend une interface d'indexage formée par des renfoncements 11 sur sa paroi latérale, qui s'engagent avec une interface d'indexage de la troisième pièce 30 formée par des renfoncements 31 de la paroi latérale de la troisième pièce 30.

En conséquence, la troisième pièce 30 peut être enfoncée ou insérée dans la première pièce 10 avant l'opération de soudage, ces deux pièces 10 et 30 forment alors un sous ensemble qui peut être manipulé en saisissant uniquement la première pièce 10 (si la troisième pièce 30 est insérée en force par exemple), et soudé par friction sur la deuxième pièce 20. En effet, les interfaces d'indexage de la première pièce 10 et de la troisième pièce 30 permettent un blocage en rotation entre ces deux pièces selon l'axe 100 du générateur de gaz (l'axe de rotation lors de la soudure par friction), ainsi qu'un arrêt en translation le long de ce même axe 100, pour éviter un recul de la troisième pièce 30 par rapport à la première pièce 10 sous l'effet de l'effort de forge appliqué lors de l'opération de soudage.

L'invention permet donc de souder simultanément la première pièce 10, la deuxième pièce 20 et la troisième pièce 30 lors de la même opération de soudage, et sans outillage spécifique pour tenir la troisième pièce 30 (puisque c'est la première pièce 10 qui la maintient et qui l'indexe).

De plus, l'invention propose d'attacher la troisième pièce 30 sur la même zone de soudure par friction que pour les première et deuxième pièces 10 et 20, ce qui limite le nombre de bourrelets de matière.

Par ailleurs, les renfoncements 11 qui sont dirigés vers l'axe 100 du générateur de gaz (vers son intérieur, c'est-à-dire vers la chambre de combustion 60), forment une interface idéale pour une opération de sertissage. En effet, une telle géométrie en creux permet de repousser de la matière d'une pièce externe lors d'une opération de sertissage (radial dans le cas présent).

En conséquence, la quatrième pièce 40 est sertie sur la première pièce 10, avec des zones 43 de la quatrième pièce repoussées dans les renfoncements 11 de la première pièce 10. Cette interface de sertissage en commun avec l'interface d'indexage de la première pièce 10 permet donc de simplifier la conception et la fabrication des composants, ce qui procure des simplifications de coût.

On comprendra que diverses modifications et/ou améliorations évidentes pour l'homme du métier peuvent être apportées aux différents modes de réalisation de l'invention décrits dans la présente description sans sortir du cadre de l'invention défini par les revendications annexées.

## Revendications

1. Générateur de gaz comprenant :
- au moins une matière pyrotechnique (70) agencée pour produire des gaz,
- au moins un sous ensemble formé au moins par une première pièce (10) et une deuxième pièce (20) fixées ensemble par soudure par friction,
- au moins une troisième pièce (30) fixée à au moins l'une de la première pièce (10) et de la deuxième pièce (20) par soudure par friction,
dans lequel la troisième pièce (30) et l'une de la première pièce (10) et de la deuxième pièce (20) comprennent chacune une interface d'indexage agencée pour bloquer temporairement au moins deux degrés de liberté entre la troisième pièce (30) et ladite une de la première pièce (10) et de la deuxième pièce (20), de sorte à permettre une soudure par inertie simultanée de la troisième pièce (30) et ladite une de la première pièce (10) et de la deuxième pièce (20) sur l'autre de la première pièce (10) et de la deuxième pièce (20),
dans lequel la soudure par friction est réalisée par une opération de soudage par outil à inertie de rotation, et **caractérisé en ce que** l'interface d'indexage est agencée pour garantir un entraînement en rotation de la troisième pièce (30) par ladite une de la première pièce (10) et de la deuxième pièce (20), lors de l'opération de soudage, sans contact entre l'outil à inertie de rotation et la troisième pièce (30)..

2. Générateur de gaz selon la revendication précédente, dans lequel la première pièce (10) et la deuxième pièce (20) sont fixées ensemble le long d'une zone de soudure par friction, et dans lequel la troisième pièce (30) est fixée à au moins l'une de la première pièce (10) et de la deuxième pièce (20) par ladite soudure par friction desdites première et deuxième pièces (10, 20), au niveau de ladite zone de soudure par friction.

3. Générateur de gaz selon l'une des revendications précédentes, dans lequel la première pièce (10) et la deuxième pièce (20) présentent des parois d'épaisseur prédéterminées, et dans lequel la troisième pièce (30) présente une paroi d'épaisseur inférieure à la moitié de l'épaisseur de la première et/ou de la deuxième pièce (20).

4. Générateur de gaz selon l'une des revendications précédentes, dans lequel l'interface d'indexage comprend des zones déformées ponctuelles d'une paroi latérale de la troisième pièce (30) et/ou ladite une de la première pièce (10) et de la deuxième pièce (20).

5. Générateur de gaz selon la revendication précédente, dans lequel les zones déformées sont des renfoncements (11) vers l'intérieur du générateur.

6. Générateur de gaz selon l'une des revendications précédentes, dans lequel l'interface d'indexage forme une zone d'ancrage (43) pour une quatrième pièce sertie sur le sous ensemble.

7. Générateur de gaz selon la revendication précédente, dans lequel la quatrième pièce comprend une collerette agencée pour servir d'interface de fixation du générateur de gaz dans un module de sécurité automobile.

8. Générateur de gaz selon l'une des revendications précédentes, dans lequel le sous ensemble forme une chambre de combustion (60) du générateur de gaz et comprend au moins une tuyère (21) agencée pour piloter une combustion sous pression de ladite au moins une matière pyrotechnique (70), et dans lequel la troisième pièce (30) est agencée entre ladite au moins une tuyère (21) et ladite au moins une matière pyrotechnique (70).

9. Générateur de gaz selon la revendication précédente, comprenant au moins un filtre (50), agencé entre la troisième pièce (30) et ladite au moins une tuyère (21).

10. Générateur de gaz selon l'une des revendications précédentes, dans lequel la troisième pièce (30) est une grille de calage.

11. Générateur de gaz selon l'une des revendications 1 à 9, dans lequel la troisième pièce (30) est un opercule.

12. Générateur de gaz selon l'une des revendications précédentes, dans lequel :
- la première pièce (10) comprend un fond et une paroi latérale agencée entre le fond et une ouverture agencée pour recevoir ladite au moins une matière pyrotechnique (70) au cours de la fabrication du générateur de gaz,
- la troisième pièce (30) est contenue dans la première pièce (10), et agencée entre l'ouverture et ladite au moins une matière pyrotechnique (70).

13. Module de sécurité automobile comprenant au moins un générateur de gaz selon l'une des revendications précédentes.

14. Véhicule automobile comprenant au moins un générateur de gaz selon l'une des revendications 1 à 12.

## Patentansprüche

1. Gasgenerator, umfassend:
- mindestens ein pyrotechnisches Material (70), das zur Erzeugung von Gasen angeordnet ist,
- mindestens eine Unterbaugruppe, die mindestens aus einem ersten Teil (10) und einem zweiten Teil (20) besteht, die durch Reibschweißen miteinander verbunden sind,
- mindestens einen dritten Teil (30), der durch Reibschweißen an mindestens einem des ersten Teils (10) und des zweiten Teils (20) befestigt ist,
wobei der dritte Teil (30) und eines des ersten Teils (10) und des zweite Teils (20) jeweils eine Indexschnittstelle enthalten, die angeordnet ist, um vorübergehend mindestens zwei Freiheitsgrade zwischen dem dritten Teil (30) und einem von dem ersten Teil (10) und dem zweiten Teil (20) zu blockieren, um das gleichzeitige Trägheitsschweißen des dritten Teils (30) und des einen von dem ersten Teil (10) und dem zweiten Teil (20) auf dem anderen des ersten Teils (10) und des zweiten Teils (20) zu ermöglichen, in dem das Reibschweißen durch einen Schweißvorgang unter Verwendung eines Rotationsträgheitswerkzeugs durchgeführt wird und **dadurch gekennzeichnet ist, dass** die Indexierschnittstelle so angeordnet ist, dass während des Schweißvorgangs ein Drehantrieb des dritten Teils (30) durch den einen von dem ersten Teil (10) und den zweiten Teil (20) ohne Kontakt zwischen dem Rotationsträgheitswerkzeug und dem dritten Teil (30) gewährleistet ist.

2. Gasgenerator nach dem vorhergehenden Anspruch, wobei der erste Teil (10) und der zweite Teil (20) entlang einer Reibschweißzone miteinander verbunden sind und bei dem der dritte Teil (30) durch das Reibschweißen des ersten und zweiten Teils (10, 20) an der Reibschweißzone an mindestens einem des ersten Teils (10) und des zweiten Teils (20) befestigt ist.

3. Gasgenerator nach einem der vorhergehenden Ansprüche, wobei der erste Teil (10) und der zweite Teil (20) Wände mit vorbestimmter Dicke aufweisen und wobei der dritte Teil (30) eine Wand aufweist, welche eine geringere Dicke als die Hälfte der Dicke des ersten und/oder zweiten Teils (20) hat.

4. Gasgenerator nach einem der vorhergehenden Ansprüche, wobei die Indexierschnittstelle punktverformte Zonen einer Seitenwand des dritten Teils (30) und/ oder des einen von dem ersten Teil (10) und dem zweiten Teil (20) umfasst.

5. Gasgenerator nach dem vorhergehenden Anspruch, wobei die verformten Zonen Vertiefungen (11) zum Innern des Generators sind.

6. Gasgenerator nach einem der vorhergehenden Ansprüche, bei dem die Indexierschnittstelle eine Verankerungszone (43) für einen vierten Teil bildet, der auf die Unterbaugruppe gecrimpt ist.

7. Gasgenerator nach dem vorhergehenden Anspruch, wobei der vierte Teil einen Flansch umfasst, der angeordnet ist, um als Schnittstelle zum Befestigen des Gasgenerators in einem Fahrzeugsicherheitsmodul zu dienen.

8. Gasgenerator nach einem der vorhergehenden Ansprüche, wobei die Unterbaugruppe eine Brennkammer (60) des Gasgenerators bildet und mindestens eine Düse (21) umfasst, die angeordnet ist, um eine Verbrennung unter Druck des mindestens einen pyrotechnischen Materials (70) zu steuern, und wobei der dritte Teil (30) zwischen der mindestens einen Düse (21) und dem mindestens einen pyrotechnischen Material (70) angeordnet ist.

9. Gasgenerator nach dem vorhergehenden Anspruch, umfassend mindestens einen Filter (50), der zwischen dem dritten Teil (30) und der mindestens einen Düse (21) angeordnet ist.

10. Gasgenerator nach einem der vorhergehenden Ansprüche, wobei der dritte Teil (30) ein Zeitraster ist.

11. Gasgenerator nach einem der Ansprüche 1 bis 9, wobei der dritte Teil (30) eine Abdeckung ist.

12. Gasgenerator nach einem der vorhergehenden Ansprüche, wobei:
- der erste Teil (10) einen Boden und eine Seitenwand, die zwischen dem Boden und einer Öffnung angeordnet ist, umfasst, welche zum Empfangen der mindestens einen pyrotechnischen Substanz (70) während der Herstellung des Gasgenerators angeordnet ist,
- der dritte Teil (30) in dem ersten Teil (10) enthalten und zwischen der Öffnung und dem mindestens einen pyrotechnischen Material (70) angeordnet ist.

13. Fahrzeugsicherheitsmodul, umfassend mindestens einen Gasgenerator nach einem der vorhergehenden Ansprüche.

14. Kraftfahrzeug, umfassend mindestens einen Gasgenerator nach einem der Ansprüche 1 bis 12.

## Claims

1. Gas generator comprising:
- at least one pyrotechnic material (70) arranged to produce gases;
- at least one sub-assembly formed at least by a first part (10) and a second part (20) that are attached to one another by means of friction welding;
- at least one third part (30) that is attached to at least one of the first part (10) and the second part (20) by means of friction welding,
the third part (30) and one of the first part (10) and the second part (20) each comprising an indexing interface arranged to temporarily block at least two degrees of freedom between the third part (30) and said one of the first part (10) and the second part (20), so as to allow simultaneous inertia welding of the third part (30) and said one of the first part (10) and the second part (20) to the other of the first part (10) and the second part (20), the friction welding being carried out by means of a welding operation using a rotational inertia tool, and **characterized in that** the indexing interface is arranged to ensure a rotation of the third part (30) by said one of the first part (10) and the second part (20) during the welding operation, without contact between the rotational inertia tool and the third part (30).

2. Gas generator according to the preceding claim, wherein the first part (10) and the second part (20) are attached to one another along a friction-welding region, and wherein the third part (30) is attached to at least one of the first part (10) and the second part (20) by means of said friction welding of said first and second parts (10, 20) at said friction welding region.

3. Gas generator according to any of the preceding claims, wherein the first part (10) and the second part (20) have walls of predetermined thickness, and wherein the third part (30) has a wall thickness that is less than half the thickness of the first and/or second part (20).

4. Gas generator according to any of the preceding claims, wherein the indexing interface comprises point-deformed regions of a side wall of the third part (30) and/or said one of the first part (10) and the second part (20).

5. Gas generator according to the preceding claim, wherein the deformed regions are recesses (11) toward the interior of the generator.

6. Gas generator according to any of the preceding claims, wherein the indexing interface forms an anchoring region (43) for a fourth part that is crimped onto the sub-assembly.

7. Gas generator according to the preceding claim, wherein the fourth part comprises a flange that is arranged to be used as an interface for attaching the gas generator in a motor vehicle safety module.

8. Gas generator according to any of the preceding claims, wherein the sub-assembly forms a combustion chamber (60) of the gas generator and comprises at least one nozzle (21) arranged to control combustion under pressure of said at least one pyrotechnic material (70), and wherein the third part (30) is arranged between said at least one nozzle (21) and said at least one pyrotechnic material (70).

9. Gas generator according to the preceding claim, comprising at least one filter (50) that is arranged between the third part (30) and said at least one nozzle (21).

10. Gas generator according to any of the preceding claims, wherein the third part (30) is a retaining grid.

11. Gas generator according to any of claims 1 to 9, wherein the third part (30) is a cover.

12. Gas generator according to any of the preceding claims, wherein:
- the first part (10) comprises a bottom and a lateral wall that is arranged between the bottom and an opening that is arranged to receive said at least one pyrotechnic material (70) during the manufacture of the gas generator;
- the third part (30) is contained in the first part (10) and is arranged between the opening and said at least one pyrotechnic material (70).

13. Motor vehicle safety module comprising at least one gas generator according to any of the preceding claims.

14. Motor vehicle comprising at least one gas generator according to any of claims 1 to 12.
